# EUROPÄISCHE PATENTSCHRIFT

(11) **EP 0 466 971 B1**
(45) Veröffentlichungstag und Bekanntmachung des Hinweises auf die Patenterteilung: **30.03.1994**
(21) Anmeldenummer: 90117054.8
(22) Anmeldetag: 05.09.1990
(51) Int. Cl.: B23P 11/02, C21C 5/48, C04B 37/02

(54) **Verfahren zur Herstellung eines Verbundteiles**
Method for manufacture of a compound part
Méthode de fabrication d'une pièce composite

(30) Priorität: 22.12.1989 DE 3942498; 04.07.1990 DE 4021259
(43) Veröffentlichungstag der Anmeldung: 22.01.1992
(73) Patentinhaber: DIDIER-WERKE AG, 65189 Wiesbaden (DE)
(72) Erfinder: Brückner, Raimund, D-6272 Engenhahn (DE); Rothfuss, Hans, D-6204 Taunusstein 1 (DE); Winkelmann, Manfred, D-4150 Krefeld 11 (DE); Nebe, Ulrich, Dr., D-6303 Hungen (DE)
(74) Vertreter: KEIL & SCHAAFHAUSEN Patentanwälte

(56) Entgegenhaltungen:
- EP-A- 0 038 072
- DE-A- 2 715 290
- DE-A- 3 543 311
- DE-B- 1 202 105
- PATENT ABSTRACTS OF JAPAN, unexamined applications, M Field, Band 13, Nr. 415, 13. September 1989 THE PATENT OFFICE JAPANESE GOVERNMENT Seite 59 M 870 *Kokai-Nr. 1-153 224 (NGK INSULATORS LTD).

## Beschreibung

Die Erfindung betrifft ein Verfahren und eine Vorrichtung zur Herstellung eines Verbundteiles durch Aufschrumpfen eines Außenmantels auf ein keramisches Innenteil, wobei der Außenmantel aufgeheizt wird und schließlich das Verbundteil nach gegenseitiger Positionierung des Außenmantels und des Innenteils abgekühlt wird.

Ein derartiges Verfahren ist in der DE-A-35 27 793 zur Herstellung eines Gasspülsteins beschrieben. Dort wird die den Außenmantel bildende Blechhülse mittels einer Flamme oder eines Glühofens erhitzt. Zumindest im erstgenannten Fall ist die Erhitzung der Blechhülse ungleichmäßig in der Weise, daß einige Zonen der Blechhülse kälter bleiben als andere. Daraus resultiert eine unterschiedliche Aufdehnung der Blechhülse. Dies ist für das anschließende Aufschrumpfen ungünstig. Beim Zusammenfügen von Außenmantel und Innenteil, das infolge geringer Toleranzen und den hohen Temperaturen nicht einfach ist, kühlt der Blechmantel an den Außenrändern voreilend ab, so daß kein gleichmäßiges Aufschrumpfen erfolgt. Dies gilt gleichermaßen bei einer Erhitzung des Außenmantels in Glühöfen.

Die heiße Blechhülse wird mittels einer Zange oder dergleichen ergriffen und zum Formstein gebracht. Mittel, die die Blechhülse ergreifen, kühlen die Blechhülse zusätzlich in den Angriffszonen ab. Die Blechhülse ist somit, wenn sie schließlich auf den Formstein aufgeschoben wird, nicht mehr gleichmäßig aufgedehnt. Schließlich können die Mittel zum Ergreifen der heißen Blechhülse zu deren Verformung führen.

Im übrigen ist das Verfahren nach der DE 35 27 793 auch wenig wirtschaftlich, da die Wärmeabstrahlung der Blechhülse vor dem Positionieren beträchtlich ist.

In der DE-A-35 38 421 ist ein Verfahren zur Montage eines Gasspülsteins beschrieben. Dort wird zwischen den Formstein und dessen Blechhülse eine Schicht aus feuerfestem Papier eingelegt. Dieses kann aus keramischen Fasern bestehen. Die Papierschicht soll ungewollte Gasdurchlässe, die beim Aufschrumpfen verbleiben können, vermeiden.

Aufgabe der Erfindung ist es, ein Verfahren der eingangs genannten Art vorzuschlagen, durch das der gesamte Außenmantel gleichmäßig aufgeheizt wird und bei dem das Innenteil im Außenmantel in einem noch gleichmäßig aufgeheizten Zustand des Außenmantels positioniert werden kann.

Erfindungsgemäß ist obige Aufgabe bei einem Verfahren und einer Vorrichtung der eingangs genannten Art durch die Merkmale der Patentansprüche 1 und 19 gelöst.

Durch die induktive Erwärmung heizt sich der Außenmantel über seine gesamte Fläche gleichmäßig auf. Der heiße Außenmantel braucht danach nicht hantiert zu werden. Denn das Innenteil wird in den Außenmantel eingeschoben und in diesem in der gewünschten Endlage positioniert. Dabei ist der Induktor solange eingeschaltet, daß zum einen die Temperatur des Außenmantels jedenfalls nicht unter eine vorgegebene Mindesttemperatur abfällt und zum anderen keine sogenannten dunklen Flecken entstehen, die eine voreilende punktuelle Abkühlung anzeigen. Günstig wirkt sich dabei eine gute Wärmedämmung des Induktors aus.

Danach wird der Außenmantel abgekühlt, wobei er auf das Innenteil aufschrumpft. Das Abkühlen kann durch Abschalten der induktiven Wärmequelle erfolgen. Das Abkühlen kann auch dadurch geschehen, daß das Verbundteil der Raumtemperatur ausgesetzt wird. Es können jedoch auch ausnahmsweise Kühlmittel vorgesehen sein.

Eine Alternatve ist dadurch gekennzeichnet, daß das Innenteil und der Außenmantel zusammengeführt werden und das Verbundteil einer induktiven Wärmequelle ausgesetzt wird und daß danach das Innenteil in dem auf Temperatur gehaltenen Außenmantel positioniert wird. Dabei wird das Innenteil schon vor dem Aufheizen des Außenmantels an den Außenmantel angesetzt. Dies kann beispielsweise bei kegelförmiger oder kegelstumpfförmiger Gestalt des Außenmantels und den Innenteils geschehen. Der Außenmantel und das Innenteil werden dann der induktiven Wärmequelle ausgesetzt. Diese erhitzt den Außenmantel stärker als das Innenteil, so daß sich der Außenmantel gegenüber dem Innenteil ausdehnt und das Innenteil danach in dem Außenmantel in die gewünschte Position gebracht werden kann. Danach kann die induktive Wärmequelle abgeschaltet werden.

Bei beiden Alternativen wird der Außenmantel gleichmäßig aufgeheizt und das Innenteil wird im Außenmantel positioniert. Der heiße Außenmantel braucht dabei nicht ergriffen, zum Innenteil transportiert und umständlich positioniert zu werden, so daß er durch solche Verfahrensschritte nicht, auch nicht zonal, abgekühlt wird.

Auf den Energiebedarf des Verfahrens wirkt sich günstig aus, daß der heiße Außenmantel in einem ihm angepaßten Raum, der von dem anpassungsfähigen Induktor gebildet ist und nur einen kleinen Luftspalt ermöglicht, nur geringe Wärmeverluste hat. Eine gute Wärmeisolierung unterstützt diesen Effekt. Das Verfahren ist vergleichsweise einfach, da der heiße Außenmantel nicht hantiert werden muß.

In bevorzugter Ausgestaltung der Erfindung ist der Außenmantel metallisch und damit ohne weiteres induktiv erwärmbar. Der Außenmantel kann jedoch aus einem induktiv aufheizbaren keramischen Material bestehen. Bei einem keramischen Material, das erst oberhalb einer bestimmten Temperatur elektrisch leitfähig und damit induktiv aufheizbar wird, beispielsweise Yttrium-stabilisiertes Zirkonoxid, wird der Außenmantel bis zu dieser Temperatur vorgeheizt.

Das keramische Innenteil kann plattenförmig und der Außenmantel bandringförmig sein. Das Verfahren eignet sich somit zum Aufschrumpfen von Ringen, beispielsweise auf Schieberplatten eines Verschlusses eines Gefäßes für eine Metallschmelze.

Die Außenfläche des keramischen Innenteils und die dieser zugeordneten Innenfläche des Außenmantels können zylinderförmig und/oder kegelförmig und/oder kegelstumpfförmig sein. Das Verfahren eignet sich somit auch zum Aufschrumpfen eines Außenmantels eines Gasspülsteins eines Gefäßes für eine metallische Schmelze. Das keramische Innenteil kann in diesem Falle porös sein oder Gaskanäle aufweisen.

Um zwischen dem Innenteil und dem Außenmantel etwa bestehende unerwünscht hohe Fertigungstoleranzen und/oder große Unebenheiten an den aneinandergrenzenden Oberflächen des Innenteils und/oder des Außenmantels auszugleichen, wird in Ausgestaltung der Erfindung vor dem Positionieren des Innenteils im Außenmantel eine temperaturbeständige Zwischenschicht außen auf das Innenteil oder innen in den Außenmantel gebracht, wobei die Zwischenschicht durch Fertigungstoleranzen oder Unebenheiten zwischen dem Innenteil und dem Außenmantel verformbar ist.

Ein wesentlicher weiterer Vorteil der Zwischenschicht besteht darin, daß sie zugleich als elastischer Puffer wirkt. Sie kann dadurch auf den Außenmantel oder das Innenteil wirkende Stöße gegenüber dem Innenteil bzw. dem Außenmantel dämpfen. Dies ist insbesondere dann günstig, wenn das Verbundteil einen Rußpartikelfilter oder einen Katalysator in einem Kraftfahrzeug bildet.

In Weiterbildung der Erfindung wird der Außenmantel in einen an einen Frequenzumrichter angeschlossenen Induktor eingeführt und von diesem auf 500°C bis 1000°C, vorzugsweise auf 800°C bis 950°C, aufgeheizt. Danach wird das keramische Innenteil in den Außenmantel eingeführt und in seiner vorbestimmten Verbundlage positioniert. Schließlich wird der Frequenzumrichter abgeschaltet und das Verbundteil aus dem Induktor entfernt. Ein hierfür geeigneter Induktor mit Frequenzumrichter ist marktbekannt. Das Erkalten und damit Aufschrumpfen des Verbundteils beginnt, wenn der Frequenzumrichter abgeschaltet ist. Beim Entfernen des Verbundteils aus dem Induktor kann der Außenmantel schon am Innenteil festsitzen. Das Abkühlen auf Raumtemperatur erfolgt außerhalb des Induktors.

Bei einer Weiterbildung der zweiten Lösung der Aufgabe werden der Außenmantel und das keramische Innenteil außerhalb eines Induktors zusammengeführt. Dieses Verbundteil wird dann in den an einen Frequenzumrichter angeschlossenen Induktor eingeführt. In diesem wird der Außenmantel auf 500°C bis 1000°C, vorzugsweise auf 800°C bis 950°C, aufgeheizt. Das keramische Innenteil dehnt sich dabei im Vergleich zum Außenmantel weniger aus. Das Innenteil wird dann in seiner vorbestimmten Verbundlage positioniert und der Frequenzumrichter wird abgeschaltet. Schließlich wird das Verbundteil aus dem Induktor entfernt. Auch hier schrumpft der Außenmantel nach dem Positionieren bereits im Anschluß an das Abschalten des Frequenzumrichters auf.

Es hat sich gezeigt, daß als Frequenzumrichter ein Mittelfrequenzumrichter mit einer Nennleistung von 12 kW bis 30 kW, vorzugsweise 25 kW, und einer Frequenz von 4 kHz bis 12 kHz, vorzugsweise 7 kHz bis 10 kHz für das Verfahren geeignet ist.

Eine bevorzugte Weiterbildung der ersten Lösung zeichnet sich dadurch aus, daß der Außenmantel bevorzugt von unten in den Induktor eingeführt und festgelegt wird. Der Induktor ist allseits wärmeisoliert und geschlossen, wozu eine Klappe vor die Zufuhröffnung gebracht werden kann. Der Mittelfrequenzumrichter wird so lange, bis die Solltemperatur des Außenmantels erreicht ist, eingeschaltet. Erfahrungsgemäß ist das nach 10 s bis 60 s, vorzugsweise etwa 20 s bis 30 s, der Fall. Dann wird das keramische Innenteil ebenfalls von unten in den Außenmantel eingeführt und dort positioniert. Anschließend oder bereits während des Einführens des keramischen Innenteils wird der Mittelfrequenzumrichter abgeschaltet und schließlich das Verbundteil nach unten aus dem Induktor ausgeführt. Der Energiebedarf dieses Verfahrens ist vergleichsweise gering, da der Induktor geschlossen ist und erst eingeschaltet wird, wenn der Außenmantel in den Induktor eingesetzt wird und spätestens abgeschaltet wird, sobald der Innenteil im Außenmantel positioniert ist. Das Verfahren ist einfach durchführbar, weil der Außenmantel und das Innenteil von unten in den Induktor eingeschoben und nach unten aus diesem entfernt werden kann.

In einer anderen Ausgestaltung der Erfindung ist es auch möglich, den Außenmantel und das keramische Innenteil jeweils von oben in den Induktor einzuführen und das fertige Verbundteil nach oben aus dem Induktor herauszunehmen oder den Induktor anstelle der Verbundteile beweglich auszubilden.

Ausführungsbeispiele der Erfindung ergeben sich aus der folgenden Zeichnungsbeschreibung. In der Zeichnung zeigen schematisch:
- Figur 1: bei einem ersten Ausführungsbeispiel einen in einen Induktor eingeführten Außenmantel,
- Figur 2: einen nachfolgend im Außenmantel positionierten Gasspülstein,
- Figur 3: das Verbundteil beim Entfernen aus dem Induktor, und
- Figur 4: ein zweites Ausführungsbeispiel.

Ein Induktor 1 weist eine wassergekühlte Spule 2 auf, die an einen Mittelfrequenzumrichter 3 angeschlossen ist. Dieser weist eine Leistung von etwa 25 kW auf und hat eine Arbeitsfrequenz zwischen 7 kHz und 10 kHz.

Der Induktor 1 bildet einen Innenraum 4, welcher seitlich und an seiner Oberseite 5 wärmeisolierend geschlossen ist. Nach unten kann der Innenraum 4 mittels einer Klappe oder dergleichen geschlossen werden.

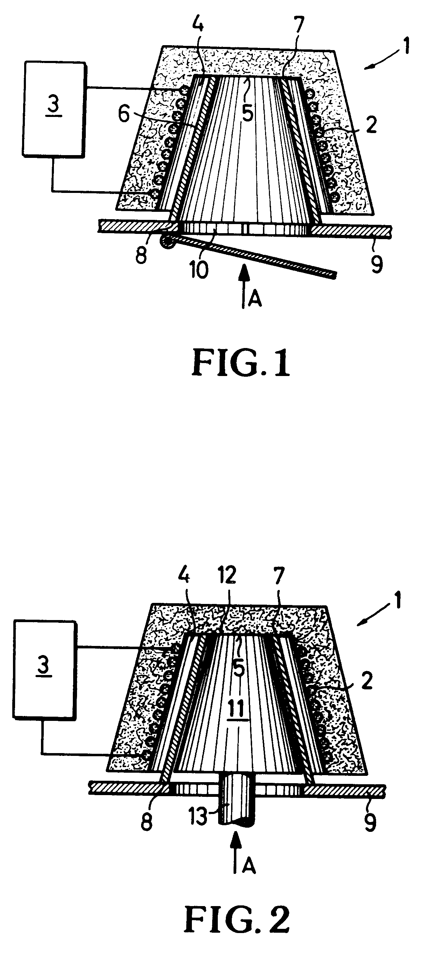

Bei dem Verfahren wird von unten ein kegelstumpfförmiger Außenmantel 6 aus Stahlblech in Richtung des Pfeiles A in den Induktor 1 eingefahren, bis sein oberer Rand 7 an der Oberseite 5 des Innenraums 4 anschlägt. Der Außenmantel 6 ist dabei an seinem unteren Rand von einem geteilten Träger 9 getragen, der eine zentrale Öffnung 10 aufweist (vgl. Figur 1).

Danach wird der Umrichter 3 eingeschaltet, so daß die Spule 2 stromdurchflossen ist. Im magnetischen Wechselfeld der Spule 2 erhitzt sich der Außenmantel 6 auf beispielsweise 800°C bis 950°C. Diese Temperatur ist nach etwa 20 s bis 30 s erreicht. Bei Erwärmung dehnt sich der Außenmantel 6 aus.

Es wird jetzt in den ausgedehnten Außenmantel 6 in Richtung des Pfeiles A ein kegelstumpfförmiger Gasspülkegel 11 aus keramischem Material durch die Öffnung 10 eingeschoben, bis dieser satt anliegt. Dies bedingt, daß die aneinandergrenzenden Oberflächen der beiden zusammenzufügenden Teile schon im kalten Zustand möglichst genau aufeinander angepaßt sind. Zu große Toleranzen in den Abmessungen sind ebenso schädlich, wie zu große Unebenheiten der Oberflächen der aneinandergrenzenden Teile. Gegebenenfalls kann hier durch Nacharbeiten oder durch andere geeignete Maßnahmen Abhilfe geschaffen werden.

Um große Toleranzen oder große Unebenheiten zwischen den einander zugewandten Oberflächen des Außenmantels 6 und des Innenteils 11, im Beispielsfalle Gasspülkegel 11, auszugleichen, ist eine in der Zeichnung nicht näher dargestellte Zwischenschicht vorgesehen. Diese wird vor dem Zusammenführen des Außenmantels 6 und dem Innenteil 11 entweder in den Außenmantel 6 eingelegt, oder auf das Innenteil 11 aufgelegt. Beim Aufschrumpfen verformt sich die Zwischenschicht in ihrer Wandstärke entsprechend den jeweiligen Toleranzen und/oder den örtlichen Unebenheiten. Die Zwischenschicht muß das Innenteil 11 nicht ganz umschließen. Es genügt auch, wenn die Zwischenschicht das Innenteil 11 nur teilweise umschließt. Die Zwischenschicht kann von einer Matte oder einem Formteil gebildet sein.

Die Zwischenschicht kann aus einem kompressiblen Fasermaterial bestehen. Sie kann auch aus einem Material bestehen, das sich bei Temperatureinwirkung bläht. In diesem Fall kann die Zwischenschicht auf der Basis von keramischen Fasern, vorzugsweise Aluminiumsilikatfasern, und blähbarem Vermiculit aufgebaut sein.

Der Gasspülkegel 11 ist von einer Hubeinrichtung 13 getragen, die ihn in den Induktor 1 einführt. Sobald der Gasspülkegel 11 in seiner gewünschten Verbundlage im Außenmantel 6 positioniert ist, wird der Umrichter 3 abgeschaltet und der Träger 9 geöffnet (vgl. Figur 2). Der Außenmantel 6 schrumpft jetzt auf den Gasspülkegel 11 auf.

Anschließend wird das aus Außenmantel 6 und Gasspülkegel 11 bestehende Verbundteil mittels der Hubeinrichtung 13 in Richtung des Pfeils B nach unten aus dem Innenraum 4 entfernt. Der Träger 9 behindert dies nicht, da er geöffnet ist. Das Verbundteil kann dann unter der Umgebungstemperatur abkühlen.

Das Abschalten des Mittelfrequenzumrichters 3 muß nicht unbedingt erst dann erfolgen, wenn der Gasspülkegel 11 im Außenmantel 6 positioniert ist. Der Mittelfrequenzumrichter 3 kann auch schon während des Einführens des Gasspülkegels 11 abgeschaltet werden, da aufgrund der Wärmespeicherkapazität in Verbindung mit einer guten Wärmeisolierung des Induktors, der zudem der Form des Werkstücks angepaßt werden kann, der Außenmantel 6 nicht sofort nach dem Abschalten schrumpft.

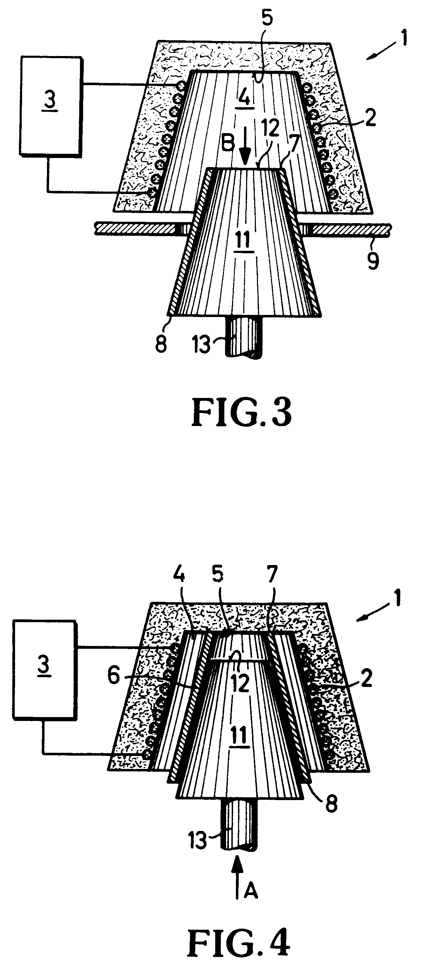

Bei einem weiteren Ausführungsbeispiel (vgl. Figur 4) werden der kalte Außenmantel 6 und der Gasspülkegel 11 außerhalb des Innenraums 4 zusammengesteckt. Dies kann dadurch geschehen, daß der Außenmantel 6 auf den bereits auf der Hubeinrichtung 13 sitzenden Gasspülkegel 11 geschoben wird. Dies kann jedoch auch dadurch erfolgen, daß der Gasspülkegel 11 in den Außenmantel 6 eingeschoben wird. Da der Gasspülkegel 11 in diesem Zustand noch nicht ausgedehnt ist, ist an dem Verbundteil die gewünschte, vorbestimmte Verbundlage noch nicht erreicht.

Anschließend wird dieses Verbundteil mittels der Hubeinrichtung 13 in Richtung des Pfeiles A von unten in den Innenraum 4 eingeschoben, bis der obere Rand 7 des Außenmantels 6 an der Oberseite 5 des Innenraums 4 anschlägt. Diese Stellung ist in Figur 4 gezeigt.

Danach wird der Mittelfrequenzumrichter 3 eingeschaltet, so daß sich der Außenmantel 6 erwärmt und ausdehnt. Der Gasspülkegel 11 wird dann mittels der Hubeinrichtung 13 in Richtung des Pfeiles A weitergeschoben, bis er in seiner Verbundlage positioniert ist. Seine obere Stirnseite ist in Figur 2 mit 12 bezeichnet. Der Mittelfrequenzumrichter 3 wird abgeschaltet, so daß nun der Außenmantel 6 auf den Gasspülkegel 11 aufschrumpft. Die Hubeinrichtung 13 fährt jetzt das Verbundteil 6, 11 in Richtung des Pfeiles B aus dem Innenraum 4.

Bei einer weiteren Ausführung könnten auch Teilmerkmale der beschriebenen Ausführungen kombiniert werden. Beispielsweise ist es möglich, den kalten Außenmantel 6 entsprechend Figur 1 im Induktor 1 zu halten und dann den Gasspülkegel 11 mittels der Hubeinrichtung 13 in den noch kalten Außenmantel 6 einzuführen, wodurch die Stellung nach Figur 4 erreicht wird. Anschließend wird dann der Außenmantel 6 aufgeheizt und der Gasspülkegel 11 in der beschriebenen Weise positioniert.

Der Induktor 1 kann so angeordnet sein, daß er unten geschlossen und oben offen ist. Nachteilig dabei sind jedoch die Wärmeverluste durch die nach oben offene Seite.

## Patentansprüche

1. Verfahren zur Herstellung eines Verbundteiles durch Aufschrumpfen eines Außenmantels (6) auf ein keramisches Innenteil (11), wobei der Außenmantel (6) aufgeheizt wird und schließlich das Verbundteil nach gegenseitiger Positionierung des Außenmantels (6) und des Innenteils abgekühlt wird,
dadurch gekennzeichnet,
daß der metallische oder aus einem induktiv aufheizbaren keramischen Material bestehende Außenmantel (6) in einen wärmeisolierten Innenraum eines Induktors (1) eingeführt und von diesem mittels induktiver Erwärmung auf 500°C bis 1000°C, vorzugsweise 800°C bis 950°C, aufgeheizt wird, und daß danach in den auf einem Solltemperaturniveau gehaltenen Außenmantel (6) das keramische Innenteil (11) eingeführt und in seiner vorbestimmten Verbundlage positioniert wird und das Verbundteil aus dem Innenraum (4) des Induktors (1) entfernt wird.

2. Verfahren nach Anspruch 1,
dadurch gekennzeichnet,
daß vor dem Aufheizen des Außenmantels (6) das Innenteil (11) an ihn angesetzt wird.

3. Verfahren nach Anspruch 1 oder 2,
gekennzeichnet durch Verwendung eines plattenförmigen, keramischen Innenteils und eines bandringförmigen Außenmantels.

4. Verfahren nach Anspruch 1 oder 2,
gekennzeichnet durch Verwendung eines Innenteils mit einer zylinderförmigen und/oder kegelförmigen und/oder kegelstumpfförmigen Außenfläche und eines Außenmantels mit einer zylinderförmigen und/oder kegelförmigen und/oder kegelstumpfförmigen Innenfläche.

5. Verfahren nach einem der vorhergehenden Ansprüche,
dadurch gekennzeichnet,
daß ein Frequenzumrichter (3), an den der Induktor (1) angeschlossen ist, abgeschaltet wird, wenn das Innenteil (11) im Außenmantel (6) in seiner vorbestimmten Verbundlage positioniert ist.

6. Verfahren nach einem der vorhergehenden Ansprüche 2 bis 5,
dadurch gekennzeichnet,
daß der Außenmantel (6) und das keramische Innenteil (11) außerhalb des Induktors (1) zusammengeführt und danach in den an den Frequenzumrichter (3) angeschlossenen Induktor (1) eingeführt werden und in diesem der Außenmantel (6) auf 500°C bis 1000°C, vorzugsweise auf 800°C bis 950°C, aufgeheizt wird, daß das Innenteil (11) dann in seiner vorbestimmten Verbundlage positioniert und der Frequenzumrichter abgeschaltet wird und daß dann das Verbundteil aus dem Induktor entfernt wird.

7. Verfahren nach einem der vorhergehenden Ansprüche,
dadurch gekennzeichnet,
daß der Frequenzumrichter ein Mittelfrequenzumrichter mit einer Nennleistung von 12 kW bis 30 kW, vorzugsweise 25 kW, und einer Frequenz von 4 kHz bis 12 kHz, vorzugsweise 7 kHz bis 10 kHz, ist.

8. Verfahren nach einem der vorhergehenden Ansprüche,
dadurch gekennzeichnet,
daß vor dem Positionieren des Innenteils im Außenmantel (6) eine temperaturbeständige Zwischenschicht außen auf das Innenteil (11) oder innen in den Außenmantel (6) gebracht wird, wobei die Zwischenschicht Fertigungstoleranzen oder Unebenheiten zwischen dem Innenteil (11) und dem Außenmantel (6) ausgleicht.

9. Verfahren nach den Anspruch 8,
dadurch gekennzeichnet,
daß die Zwischenschicht das Innenteil ganz oder teilweise umschließt.

10. Verfahren nach Anspruch 8 oder 9,
dadurch gekennzeichnet,
daß die Zwischenschicht kompressibel ist.

11. Verfahren nach einem der vorhergehenden Ansprüche 8 oder 9,
dadurch gekennzeichnet,
daß sich die Zwischenschicht bei Temperatureinwirkung bläht.

12. Verfahren nach Anspruch 11,
dadurch gekennzeichnet,
daß die Zwischenschicht auf der Basis von keramischen Fasern, vorzugsweise Aluminiumsilikatfasern, und blähbarem Vermiculit aufgebaut ist.

13. Verfahren nach einem der vorhergehenden Ansprüche 8 bis 12,
dadurch gekennzeichnet,
daß die Zwischenschicht eine Matte oder ein Formteil ist.

14. Verfahren nach einem der vorhergehenden Ansprüche,
dadurch gekennzeichnet,
daß als Innenteil (11) ein Gasspülkegel verwendet wird.

15. Verfahren nach einem der vorhergehenden Ansprüche,
dadurch gekennzeichnet,
daß als keramisches Innenteil (11) ein Ausguß für metallische Schmelzen, wie Freilaufdüse, Wechselausguß an Schiebeverschlüssen oder Eintauchausguß oder Schattenrohr, verwendet wird.

16. Verfahren nach einem der vorhergehenden Ansprüche,
dadurch gekennzeichnet,
daß als keramisches Innenteil (11) ein Partikelfilter und/oder ein Katalysator verwendet wird.

17. Verfahren nach einem oder mehreren der vorhergehenden Ansprüche,
dadurch gekennzeichnet,
daß der Außenmantel von unten in den Induktor eingeführt und festgelegt wird, der Induktor allseits wärmeisoliert und geschlossen ist, daß dann der Mittelfrequenzumrichter eingeschaltet wird und nach 10 s bis 60 s, vorzugsweise 20 s bis 30 s, das keramische Innenteil in den Außenmantel eingeführt und dort positioniert wird, daß anschließend oder bereits während des Einführens des keramischen Innenteils der Mittelfrequenzumrichter abgeschaltet wird und schließlich das Verbundteil nach unten aus dem Induktor ausgeführt wird.

18. Verfahren nach einem oder mehreren der vorhergehenden Ansprüche,
dadurch gekennzeichnet,
daß der Außenmantel und das keramische Innenteil von oben in den Induktor eingeführt werden und das fertige Verbundteil nach oben aus dem Induktor herausgenommen wird und/oder daß der Induktor zur Einführung oder Herausnahme der Teile beweglich ausgebildet ist.

19. Vorrichtung zur Herstellung eines Verbundteiles durch Aufschrumpfen eines Außenmantels (6) auf ein keramisches Innenteil (11), wobei der Außenmantel (6) aufgeheizt wird und schließlich das Verbundteil nach gegenseitiger Positionierung des Außenmantel (6) und des Innenteils (11) abgekühlt wird,
dadurch gekennzeichnet,
daß ein Induktor (1) vorgesehen ist, der einen wärmeisolierten Innenraum (4) bildet, wobei der Innenraum (4) so bemessen ist, daß der Außenmantel (6) in ihn paßt, und der Innenraum (4) des Induktors (1) an einer Seite offen ist und die dieser gegenüberliegende, geschlossene Seite (5) des Innenraums (4) einen Anschlag für einen Rand (7) des Außenmantels (6) bildet.

20. Vorrichtung nach Anspruch 19,
dadurch gekennzeichnet,
daß die offene Seite durch eine Klappe schließbar ist.

21. Vorrichtung nach einem der vorhergehenden Ansprüche 19 oder 20,
dadurch gekennzeichnet,
daß der Außenmantel (6) in dem Innenraum (4) mittels eines Trägers (9) gehalten ist, der eine Öffnung (10) aufweist, durch die mittels einer Hubeinrichtung (13) das Innenteil (11) in den Außenmantel (6) einschiebbar ist.

22. Vorrichtung nach einem der vorhergehenden Ansprüche 19 bis 21,
dadurch gekennzeichnet,
daß die offene Seite des Innenraums (4) am Induktor (1) oben liegt.

## Claims

1. Method of manufacturing a composite article by shrinking an outer shell (6) onto a ceramic inner member (11) wherein the outer shell (6) is heated and finally the composite article is cooled after mutually positioning the outer shell (6) and the inner member, characterised in that the outer shell (6), which is metallic or comprises an inductively heatable ceramic material, is introduced into a thermally insulated internal space in an inductor (1) and is heated by it by means of inductive heating to 500°C to 1000°C, preferably 800°C to 950°C, and that thereafter the ceramic inner member (11) is introduced into the outer shell (6) which is maintained at a desired temperature level and positioned in its predetermined position and the composite article is removed from the internal space (4) in the inductor (1).

2. Method as claimed in Claim 1, characterised in that before the heating of the outer shell (6) the inner member (11) is placed on it.

3. Method as claimed in Claim 1 or 2, characterised by the use of a plate-shaped, ceramic inner member and an annular hoop-shaped outer shell.

4. Method as claimed in Claim 1 or 2, characterised by the use of an inner member with a cylindrical and/or conical and/or frustoconical outer surface and an outer shell with a cylindrical and/or conical and/or frustoconical inner surface.

5. Method as claimed in one of the preceding claims, characterised in that a frequency changer (3), to which the inductor (1) is connected, is switched off when the inner member (11) is positioned in the outer shell (6) in its predetermined position.

6. Method as claimed in one of the preceding Claims 2 to 5, characterised in that the outer shell (6) and the ceramic inner member (11) are brought together outside the inductor (1) and thereafter introduced into the inductor (1), which is connected to the frequency changer (3) and the outer shell (6) is heated in it to 500°C to 1000°C, preferably to 800°C to 950°C, that the inner member (11) is then positioned in its predetermined position and the frequency changer is switched off and that the composite article is then removed from the inductor.

7. Method as claimed in one of the preceding claims, characterised in that the frequency changer is a centre frequency changer with a nominal output of 12 kW to 30 kW, preferably 25 kW, and a frequency of 4 kHz to 12 kHz, preferably 7 kHz to 10 kHz.

8. Method as claimed in one of the preceding claims, characterised in that before positioning the inner member in the outer shell (6) a temperature-resistant intermediate layer is applied externally to the inner member (11) or internally to the outer shell (6), whereby the intermediate layer evens out manufacturing tolerances or irregularities between the inner member (11) and the outer shell (6).

9. Method as claimed in Claim 8, characterised in that the intermediate layer wholly or partially surrounds the inner member.

10. Method as claimed in Claim 8 or 9, characterised in that the intermediate layer is compressible.

11. Method as claimed in one of the preceding Claims 8 or 9, characterised in that the intermediate layer swells under the influence of temperature.

12. Method as claimed in Claim 11, characterised in that the intermediate layer is constructed on the basis of ceramic fibres, preferably aluminosilicate fibres, and expandable vermiculite.

13. Method as claimed in one of the preceding Claims 8 to 12, characterised in that the intermediate layer is a mat or a moulded member.

14. Method as claimed in one of the preceding claims, characterised in that a gas flushing cone is used as the inner member (11).

15. Method as claimed in one of the preceding claims, characterised in that an outlet for molten metals, such as a free-running nozzle, an alternating nozzle on sliding gate valves or immersion nozzle or shadow tube is used as the ceramic inner member (11).

16. Method as claimed in one of the preceding claims, characterised in that a particle filter and/or a catalyst is used as the ceramic inner member (11).

17. Method as claimed in one or more of the preceding claims, characterised in that the outer shell is introduced into the inductor from below and fixed in position, the inductor is thermally insulated on all sides and closed, that the centre frequency changer is then switched on and the ceramic inner member is introduced into the outer shell and positioned there after 10 s to 60 s, preferably 20 s to 30 s, that subsequently or even during the introduction of the ceramic inner member the centre frequency changer is switched off and finally the composite article is taken out of the inductor downwardly.

18. Method as claimed in one or more of the preceding claims, characterised in that the outer shell and the ceramic inner member are introduced into the inductor from above and the finished composite article is removed upwardly from the inductor and/or that the inductor is movably constructed for introducing or removing the articles.

19. Apparatus for manufacturing a composite article by shrinking an outer shell (6) onto a ceramic inner member (10), whereby the outer shell (6) is heated and finally the composite article is cooled after mutually positioning the outer shell (6) and the inner member (11), characterised in that an inductor (1) is provided which defines a thermally insulated internal space (4), the internal space (4) being so dimensioned that the outer shell (6) fits in it and the internal space (4) in the inductor (1) is open on one side and the opposite closed side (5) of the internal space (4) forms an abutment for an edge (7) of the outer shell (6).

20. Apparatus as claimed in Claim 19, characterised in that the open side may be closed by a flap.

21. Apparatus as claimed in one of the preceding Claims 19 or 20, characterised in that the outer shell (6) is held in the internal space (4) by means of a carrier (9) which has an opening (10) through which the inner member (11) may be slid into the outer shell (6) by means of a lifting device (13).

22. Apparatus as claimed in one of the preceding Claims 19 to 21, characterised in that the open side of the internal space (4) is at the top of the inductor (1).

## Revendications

1. Procédé de fabrication d'une pièce composite par frettage d'une enveloppe (6) extérieure sur un élément (11) intérieur en céramique, l'enveloppe (6) extérieure étant chauffée et la pièce composite étant refroidie après positionnement réciproque de l'enveloppe (6) extérieure et de l'élément (11) intérieur, caractérisé par le fait que l'on place l'enveloppe (6) extérieure métallique ou constituée d'un matériau céramique pouvant être chauffé par induction dans une chambre intérieure calorifugée d'un inducteur (1) et, au moyen de celui-ci, on la chauffe par induction à une température comprise entre 500 °C et 1000 °C, de préférence entre 800 °C et 950 °C et par le fait qu'ensuite on introduit l'élément (11) intérieur en céramique dans l'enveloppe (6) extérieure maintenue à une température de consigne, on l'amène dans sa position de montage prédéterminée et on retire l'a pièce composite de la chambre intérieure (4) de l'inducteur (1).

2. Procédé selon la revendication 1, caractérisé par le fait qu'avant de réchauffer l'enveloppe (6) extérieure, on amène l'élément intérieur (11) contre celle-ci.

3. Procédé selon la revendication 1 ou 2, caractérisé par l'utilisation d'un élément intérieur céramique en forme de plaque et d'une enveloppe extérieure en forme d'anneau.

4. Procédé selon la revendication 1 ou 2, caractérisé par l'utilisation d'un élément intérieur en céramique présentant une surface extérieure cylindrique et/ou conique et/ou tronconique et d'une enveloppe extérieure présentant une surface intérieure cylindrique et/ou conique et/ou tronconique.

5. Procédé selon l'une des revendications précédentes, caractérisé par le fait que, lorsque l'élément (11) intérieur se trouve dans sa position d'assemblage prédéterminée à l'intérieur de l'enveloppe (6) extérieure, on met hors-circuit un convertisseur de fréquence (3) auquel l'inducteur (1) est connecté.

6. Procédé selon l'une des revendications 2 à 5 précédentes, caractérisé par le fait que l'on préassemble l'enveloppe (6) extérieure et l'élément (11) intérieur en céramique à l'extérieur de l'inducteur, on les introduit dans l'inducteur (1) connecté au convertisseur de fréquence (3) et, à l'intérieur de celui-ci, on réchauffe l'enveloppe extérieure (6) à une température comprise entre 500 °C et 1000 °C, de préférence entre 800 °C et 950 °C, par le fait qu'on amène l'élément intérieur (11) dans sa position d'assemblage prédéterminée et on met hors-circuit le convertisseur de fréquence et par le fait que l'on retire la pièce composite de l'inducteur.

7. Procédé selon l'une des revendications précédentes, caractérisé par le fait que le convertisseur de fréquence est un convertisseur à moyenne fréquence avec une puissance nominale comprise entre 12 kW et 30 kW, de préférence de 25 kW, et une fréquence comprise entre 4 kHz et 12 kHz, de préférence entre 7 kHz et 10 kHz.

8. Procédé selon l'une des revendications précédentes, caractérisé par le fait qu'avant de positionner l'élément intérieur dans l'enveloppe extérieure (6) on applique extérieurement sur l'élément intérieur (11) ou intérieurement sur l'enveloppe extérieure (6) une couche intermédiaire, ladite couche intermédiaire compensant les tolérances de fabrication ou les défauts de surface entre l'élément intérieur (11) et l'enveloppe extérieure (6).

9. Procédé selon la revendication 8, caractérisé par le fait que la couche intermédiaire entoure en totalité ou en partie l'élément intérieur.

10. Procédé selon la revendication 8 ou 9, caractérisé par le fait que la couche intermédiaire est compressible.

11. Procédé selon l'une des revendications 8 ou 9 précédentes, caractérisé par le fait que la couche intermédiaire gonfle sous l'action de la température.

12. Procédé selon la revendication 11, caractérisé par le fait que la couche intermédiaire est à base de fibres céramiques, de préférence de fibres de silicate d'aluminium et de vermiculite gonflable.

13. Procédé selon l'une des revendications 8 ou 12 précédentes, caractérisé par le fait que la couche intermédiaire est un mat ou une pièce préformée

14. Procédé selon l'une des revendications précédentes, caractérisé par le fait que l'on utilise comme élément (11) intérieur un cône d'introduction de gaz.

15. Procédé selon l'une des revendications précédentes, caractérisé par le fait que l'on utilise comme élément (11) intérieur en céramique une busette de coulée pour des bains de métal en fusion, telle qu'une busette de coulée libre, une busette interchangeable pour obturateur à tiroir ou une busette de coulée par immersion ou un tube plongeur.

16. Procédé selon l'une des revendications précédentes, caractérisé par le fait que l'on utilise comme élément (11) intérieur en céramique un filtre à particules et/ou un catalyseur.

17. Procédé selon une ou plusieurs des revendications précédentes, caractérisé par le fait que l'on introduit l'enveloppe extérieure par le bas dans l'inducteur et on l'y fixe, que l'inducteur est calorifigé sur toutes ses faces et fermé, par le fait que l'on met en circuit le convertisseur à moyenne fréquence et après 10 s à 60 s, de préférence 20 s à 30 s, on introduit l'élément intérieur en céramique dans l'enveloppe extérieure et on l'y positionne, par le fait qu'ensuite ou pendant l'introduction de l'élément intérieur en céramique on met hors circuit le convertisseur à fréquence moyenne et par le fait qu'enfin on retire la pièce composite par le bas de l'inducteur.

18. Procédé selon une ou plusieurs des revendications précédentes, caractérisé par le fait que l'on introduit l'enveloppe extérieure et l'élément intérieur en céramique par le haut dans l'inducteur et que l'on sort la pièce composite de l'inducteur par le haut et/ou que l'inducteur est mobile afin de permettre l'introduction ou l'extraction des éléments.

19. Dispositif pour la fabrication d'une pièce composite par frettage d'une enveloppe (6) extérieure sur un élément (11) intérieur en céramique, l'enveloppe (6) extérieure étant chauffée et la pièce composite étant refroidie après positionnement réciproque de l'enveloppe (6) extérieure et de l'élément (11) intérieur, caractérisé par le fait qu'il est prévu un inducteur (1) qui forme une chambre intérieure (4) calorifugée, la chambre intérieure (4) étant dimensionnée de manière telle que l'enveloppe extérieure (6) puisse y rentrer la chambre intérieure (4) de l'inducteur (1) étant ouverte d'un côté et le côté (5) fermé de la chambre intérieure (4) opposé à celui-ci constituant une butée pour un bord (7) de l'enveloppe (6) extérieure.

20. Dispositif selon la revendication 19, caractérisé par le fait que le côté ouvert peut être fermé par une porte.

21. Dispositif selon l'une des revendications 19 ou 20 précédentes, caractérisé par le fait que dans la chambre intérieure (4), l'enveloppe (6) extérieure est tenue par un support (9) qui présente une ouverture (10) à travers laquelle l'élément intérieur (11) peut être introduit dans l'enveloppe extérieure (6) avec l'aide d'un moyen de levage (13).

22. Dispositif selon l'une des revendications 19 à 21 précédentes, caractérisé par le fait que le côté ouvert de la chambre (4) intérieure est situé sur le dessus de l'inducteur (1).
